Europäisches Patentamt

European Patent Office

Office européen des brevets

(11) Veröffentlichungsnummer: **0 267 328 B1**

(12) **EUROPÄISCHE PATENTSCHRIFT**

(45) Veröffentlichungstag der Patentschrift: **20.02.91**

(51) Int. Cl.5: **C02F 1/52**, C02F 9/00, C02F 11/00

(21) Anmeldenummer: **86117390.4**

(22) Anmeldetag: **13.12.86**

(54) **Verfahren und Vorrichtung zur Reinigung von verunreinigtem Wasser, insbesondere von bei der Entschlammung von Gewässern entstehendem Trübwasser.**

(30) Priorität: **16.09.86 DE 3631472**

(43) Veröffentlichungstag der Anmeldung:
**18.05.88 Patentblatt 88/20**

(45) Bekanntmachung des Hinweises auf die
Patenterteilung:
**20.02.91 Patentblatt 91/08**

(84) Benannte Vertragsstaaten:
**AT BE CH DE IT LI NL SE**

(56) Entgegenhaltungen:
**AT-B- 379 791**
**DD-A- 205 876**
**DE-A- 3 023 276**
**US-A- 4 279 756**

(73) Patentinhaber: **Kreyenberg, Heiner, Dipl.-Ing.**
**Waldseestrasse 31**
**D-4030 Ratingen 4(DE)**

(72) Erfinder: **Kreyenberg, Heiner, Dipl.-Ing.**
**Waldseestrasse 31**
**D-4030 Ratingen 4(DE)**

(74) Vertreter: **Patentanwälte Dipl.-Ing. Alex Sten-**
**ger Dipl.-Ing. Wolfram Watzke Dipl.-Ing.**
**Heinz J. Ring**
**Kaiser-Friedrich-Ring 70**
**D-4000 Düsseldorf 11(DE)**

**Beschreibung**

Die Erfindung betrifft ein Verfahren zum Entschlammen von Gewässern, bei dem die im suspensionsartigen Schlamm enthaltenen anorganischen (Steine, Kies, Sand etc.) und organischen (Holz, Wurzeln etc.) Bestandteile voneinander separiert werden, wobei zunächst in einer ersten Stufe aus dem Schlamm die Bestandteile oberhalb einer bestimmten Größe getrennt nach anorganischen und organischen Bestandteilen ausgesondert, gereinigt und der Weiterverwertung zugeführt werden, wobei anschließend in einer zweiten Stufe aus den verbliebenen Bestandteilen oberhalb einer Mindestgröße die anorganischen Bestandteile ausgesondert, gereinigt und ebenfalls der Weiterverwertung zugeführt werden und wobei schließlich in einer dritten Stufe die anorganische und organische Trübe der dann übrig gebliebenen Bestandteile entwässert und dabei der gewonnene Dickschlamm weiterverarbeitet und das anfallende Zentratwasser bzw. Filtratwasser in das Gewässer zurückgeleitet wird. - Die Erfindung betrifft ferner eine Vorrichtung zur Durchführung des Verfahrens mit einer Entnahmevorrichtung für den Schlamm, mit einem Klassierer zum Aussondern der Bestandteile oberhalb einer bestimmten Größe und Trennen nach anorganischen und organischen Bestandteilen, mit einer dem klassierer nachgeordneten Zyklonanlage zum Aussondern der anorganischen Bestandteile oberhalb einer Mindestgröße aus den verbliebenen Bestandteilen sowie mit einer der Zyklonanlage nachgeordneten Zentrifuge zum Entwässern der anorganischen und organischen Trübe der übrig gebliebenen Bestandteile und Überführen in Dickschlamm.

Vermehrt stellt sich heutzutage die Aufgabe, durch Polymerreste und/oder Schwebstoffe und/oder Phosphate und/oder CSB (chemischer Sauerstoffbedarf) verunreinigtes Wasser, oftmals auch Trübwasser genannt, zu reinigen. Insbesondere tritt diese Problemstellung bei der Entschlammung von Gewässern auf, bei dem der dem Gewässer entnommene suspensionsartige Schlamm in verschiedenen Verfahrensstufen von den Schlammstoffen gereinigt wird und das dekantierte Sedimentwasser in das Gewässer zurückgeleitet werden muß.

Ein solches Verfahren zur Gewässerentschlammung der eingangs angegebenen Art ist in der EP-A-0 250 639 beschrieben. Es besteht im wesentlichen darin, daß aus dem dem Gewässer entnommenen Schlamm in einer ersten Verfahrensstufe zunächst die Bestandteile oberhalb einer bestimmten Größe getrennt nach anorganischen und organischen Bestandteilen ausgesondert, gereinigt und der Weiterverarbeitung zugeführt werden, daß anschließend in einer zweiten Verfahrensstufe aus den verbliebenen Bestandteilen oberhalb einer Mindestgröße die anorganischen Bestandteile ausgesondert, gereinigt und ebenfalls der Weiterverwertung zugeführt werden und daß schließlich in einer dritten Verfahrensstufe die anorganische und organische Trübe der dann übriggebliebenen Bestandteile entwässert und dabei der gewonnene Dickschlamm und das Ablaufwasser weiterverarbeitet bzw. abgeführt werden.

Das besondere Merkmal einer derartigen Gewässer-Entschlammung ist es, daß das Ablaufwasser aus der Anlage mit seinen noch verbliebenen bzw. durch das Behandlungsverfahren hineingetragenen Belastungen an Feststoff, Restpolymeren, Trägeröl (bei Verwendung von Emulsionspolymerisaten in der dritten Verfahrensstufe) und den im Gewässersediment eingebundenen Mineralöl direkt in den Vorfluter gelangt und nicht - wie bei Kläranlagen - in die Vorklärbecken. Das entnommene Wasser wird also letztlich im Kreislauf über das Rücklaufwasser zurück in das Gewässer wieder eingeführt, wobei für die Qualität des Rücklaufwassers be hördliche Einleitungskriterien festgelegt sind. Diese lassen sich kurzgefaßt derart beschreiben, daß das Rücklaufwasser der Behandlungsanlage einschließlich der Entwässerungsanlage eine Qualität haben muß, die hinsichtlich sämtlicher Verunreinigungen mindestens der des dem Gewässer entnommenen Wassers insbesondere in bezug auf den Gehalt an Polymeren, Schwebstoffen, Phosphaten und CSB, entsprechen muß. Ziel der Einleitungsparameter ist es daher, ein Rücklaufwasser zu erhalten, dessen Qualität durch die mechanischen Separations- und Entwässerungsstufen im Laufe des Behandlungsverfahrens nicht beeinträchtigt wird. Dabei besteht das Hauptproblem darin, daß es durch die Einbringung von Hilfssubstanzen, wie Flockungsmitteln, zu additiven Verunreinigungen kommt, die ein Fischsterben durch Kiemenverklebung (beispielsweise ausgelöst durch das Polymer oder andere fischtoxische Stoffe im Flockungshilfsmittel) verursachen können. Weiterhin muß die CSB-Erhöhung des fließenden Überstandswassers, bedingt durch die Verarbeitung des hochbelasteten Schlammsediments so gering wie möglich gehalten werden, wobei die eventuelle zusätzliche CSB-Belastung durch das Flockungshilfsmittel minimiert werden soll.

In der US-A-A 279 756 ist in der Beschreibungseinleitung bei der Abhandlung des Standes der Technik ein Verfahren zur Reinigung von verunreinigtem Wasser offenbart, bei dem das Wasser zunächst mit einem Flockungsmittel versetzt wird, um sodann nach erfolgter Flockung eine Sandfiltration durchzuführen. Als Flockungsmittel wird dabei ein Aluminium-Salz oder ein EisenSalz verwendet. In der Druckschrift selbst wird dieses als bekannt vorausgesetzte Verfahren als problembehaftet bezeichnet. Das bekannte Reinigungsverfahren ist somit insgesamt verbesserungsbedürftig.

Aus der Druckschrift "Wasserchemie für Ingenieure", Sontheimer et al, Universität Karlsruhe, Seite 432 ist es zur Reinigung von verunreinigtem Wasser bekannt, zunächst eine Flockung mit entsprechenden Flockungsmitteln vorzusehen, um anschließend eine Filtration durchzuführen.

Aus der Druckschrift "Verfahrenstechnische Grundlagen der Siedlungswasserwirtschaft III", Institut für Siedlungswasserwirtschaft der Universität Karlsruhe, Seiten 125 bis l28 ist es ebenfalls bekannt, zum Reinigen von verunreinigtem Wasser zunächst eine Flockung durchzuführen, um dann anschließend eine Sedimentations-Flotation-Filtration durchzuführen.

Aus der EP-A-0 169 430 ist ein Verfahren zur Klärung von verfärbten Abwässern bekannt, bei dem der entstehende Schlamm teilweise erneut dem Verarbeitungsprozeß zugeführt wird, während der restliche Schlamm über eine Ableitung in einen Container geleitet und dann zum Ablagerplatz transportiert wird.

Auch aus der EP-A-0 139 572 ist ein Verfahren zum Reinigen von verunreinigtem Wasser bekannt, bei dem der entstehende Schlamm als Rückschlamm in die Behandlung zurückgeführt wird.

Schließlich ist auch aus der EP-A-0 139 622 entsprechend der beiden zuvor abgehandelten Druckschriften bekannt, bei der Behandlung von verunreinigtem Wasser den entstehenden Schlamm teilweise als Rückschlamm in die Behandlung zurückzuführen.

Aus der AT-A-379 791 ist ein Verfahren zur Reinigung von organische Verunreinigungen enthaltenden Abwässern bekannt, bei dem anionenaktive Polyelektrolyte als Flockungsmittel verwendet werden, um so die Oberflächenladung der suspendierten Feststoffe zu berücksichtigen.

Aus der DE-A-30 23 276 ist ein Verfahren zur Flockung eines Sols mit Aluminiumsalzen bekannt, bei dem bei der Auswahl der geeigneten Flockungsmittel die Oberflächenladung der suspendierten Feststoffe berücksichtigt wird. Als Flockungsmittel wird dabei u.a. Natriumaluminat angegeben, ohne allerdings konkrete Konzentrationsangaben zu nennen.

Aus der DD-A-205 876 ist ein Verfahren zur Entfernung von Trübstoffen und/oder suspendierten organischen Farbstoffen aus Abwässern bekannt, bei der die Flockungsmittelkombination Magnesiumhydroxid-Bentonit verwendet wird.

Aus der DE-A-1 792 391 ist ein Verfahren zum Reinigen von Trinkwasser und Abwässern bekannt, bei dem als Fällungsmittel Natriumaluminat als primäres Koaguliermittel verwendet wird. Weiterhin wird die Verwendung von Bentonit vorgeschlagen.

In der DE-C-1 107 605 schließlich wird ein Verfahren zur Klärung trüber Wasser unter Verwendung von Bentonit als Flockungsmittel in einer Konzentration von 10 bis 500 mg/l vorgeschlagen.

Ausgehend von einem Verfahren zum Entschlammen von Gewässern der eingangs angegebenen Art liegt der Erfindung die **Aufgabe** zugrunde, das bekannte Verfahren derart weiterzuentwikkeln, daß eine Reinigung des insbesondere mit Polymeren, Schwebstoffen, Phosphaten und/oder CSB verunreinigten Zentratwassers bzw. Filtratwassers der dritten Stufe möglich ist; ferner soll eine Vorrichtung zur Durchführung des Verfahrens geschaffen werden.

Als technische **Lösung** wird mit der Erfindung verfahrensmäßig vorgeschlagen, daß zur Reinigung des insbesondere mit Polymeren, Schwebstoffen, Phosphaten und/oder CSB verunreinigten Zentratwassers bzw. Filtratwassers der dritten Stufe dieses mit Natriumaluminat im Bereich zwischen 120 und 225 g/m³ Wasser, vorzugsweise 150 g/m³ Wasser, als konzentrierte Lösung und/oder Bentonit im Bereich zwischen l80 und 300 g/m³ Wasser, vorzugsweise zwischen 200 und 250 g/m³ Wasser, in 2%-iger Suspension als Flockungsmittel varsetzt wird, daß die Flockung durch eine pneumatische Flotationsbehandlung des mit dem Flockungsmittel versetzten Wassers unterstützt wird, daß im Anschluß an die Flockung eine Sandfiltration durchgeführt wird und daß die ausgeflockte Phase aus Flockungsteilchen, Polymerstoffen, Ülteilchen und Schwebstoffen in Form eines Flockungsschlamms als Kontaktschlamm in die Behandlung zurückgeführt wird.

In einer Weiterbildung des Verfahrens ist eine Verweilstufe, vorzugsweise in Form eines Lamellenklärers und/oder eines Flockungsbeckens in die Flockung eingeschaltet, wobei dort anfallender Schlamm in einen Tank oder in den Zulauf eines Dekanters zurückgeführt wird.

Die erfindungsgemäße Vorrichtung zur Durchführung des Verfahrens ist gekennzeichnet durch eine eine Flockungsmittelzugabe für das Flockungsmittel sowie einen Sandfilter aufweisende Wasserreinigungsanlage (Zentratwasserreinigungsstufe), eine der Flockungsmittelzugabe nachgeordnete pneumatische Flotationsanlage zur Unterstützung der Flockung, eine Rückspülleitung vom Sandfilter zur Flotationsanlage, einen dem Sandfilter vorgeordneten Lamellenklärer, eine Rückführungsleitung vom Lamellenklärer zu einem Tank oder einem Dekanter, sowie durch ein zwischen der Flotationsanlage und dem Lamellenklärer angeordnetes Flockungsbecken.

Das erfindungsgemäße Verfahren mit der entsprechenden Vorrichtung hat den Vorteil, daß auf optimale Weise eine Reinigung des bei der Entschlammung von Gewässern anfallenden Zentratwassers bzw. Filtratwassers möglich ist. Die Restmengen an Polymerstof fen, die normalerweise eine konventionelle Flockung behindern und für fische und Plankton in natürlichen Gewässern eine Gefahr darstellen, die Schwebstoffe, die öl- und fetthaltig sind und zur Flotation neigen, sowie weiterhin die Restmengen an Phosphaten und unzulässig hohen CSB-Werten werden durch die erfindungsgemäß vorgeschlagenen Flockungsmittel insbesondere in den angegebenen Dosierungen auf optimale Weise ausgeflockt, so daß anschließend eine Abscheidung ohne weiteres möglich ist. Der Flockungsvorgang wird dabei erfindungsgemäß durch die pneumatische Flotationsbehandlung gefördert und optimiert.

Die Sandfiltration im Anschluß an die Flockung schließlich ermöglicht eine nahezu vollständige Abscheidung der ausgeflockten Phase, so daß der Flockungsschlamm erfindungsgemäß als Kontaktschlamm in die Behandlung zurückgeführt werden kann.

Ein Ausführungsbeispiel des erfindungsgemäßen Verfahrens wird nachfolgend anhand der Zeichnungen beschrieben. In diesen zeigt:

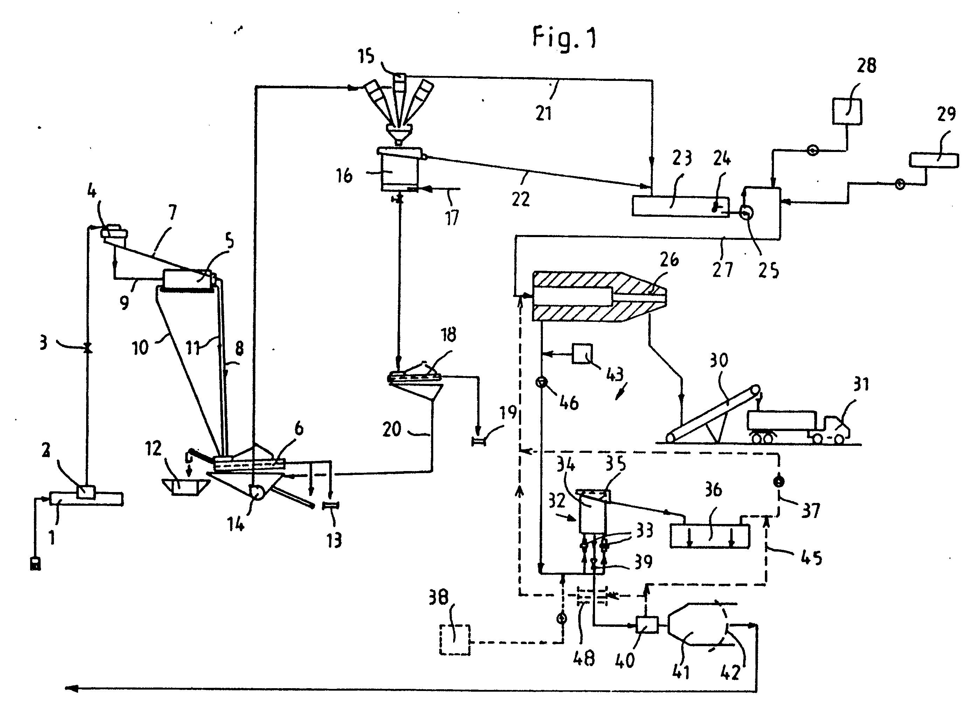

fig. 1 eine schematische Darstellung einer Anlage zur Durchführung des Verfahrens zum Entschlammen von Gewässern;

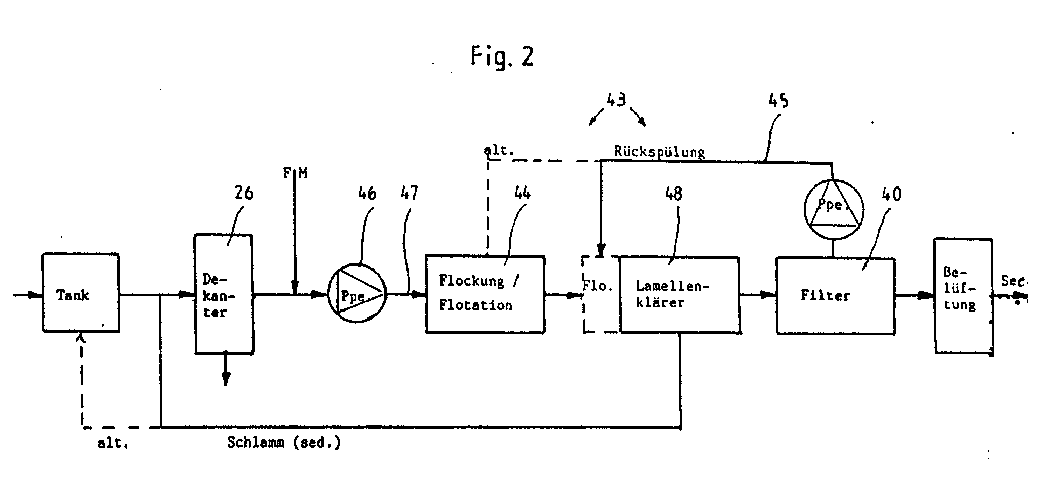

fig. 2 ein detaillierteres Fließschema für die erfindungsgemäße Nachbehandlung von Zentratwasser bzw. Filtratwasser.

(Es folgt nunmehr die Figurenbeschreibung in unveränderter Fassung, beginnend auf Seite 4, Zeile 1 der ursprünglichen Anmeldungsunterlagen.)

Die Anlage besteht zunächst aus einer Entnahmevorrichtung 1 für den Schlamm, beispielsweise in Form eines Schneidkopfsaugbaggers. Diese Entnahmevorrichtung 1 ist mit einem Steinfangkorb 2 ausgestattet, der beispielsweise eine maschenweite von 100 mm hat und somit größere Bestandteile als 100 mm auffängt.

Die Sedimentsuspension wird unter Zwischenschaltung eines Mengenreglers 3 für die Anlagenbeschickung einer ersten Trennstufe, bestehend aus einem Siebzyklon 4, einer Waschtrommel 5 sowie einem Schwingklassierer 6 zugeführt. In dieser ersten Trennstufe erfolgt eine Trennung der anorganischen und organischen Grobbestandteile oberhalb einer Größe von beispielsweise 6 mm von den Feinbestandteilen unterhalb von 6 mm. In dem Siebzyklon 4 erfolgt eine Wasservorabscheidung und Vorabsiebung der Grobbestandteile oberhalb 6 mm, so daß in einem Oberlauf 7 das vorabgeschiedene Wasser mit Feinbestandteilen unterhalb 6 mm abgeführt und über eine Leitung 8 dem Schwingklassierer 6 zugeführt wird. Die im Siebzyklon 4 vorentwässerte Feststoffsuspension mit den Grobbestandteilen wird über einen Unterlauf 9 der Waschtrommel 5 zugeführt, die mit Schikanen versehen ist. Diese bewirken eine Abscheidung der groben organischen Bestandteile (Holz, Wurzeln etc.) von den groben anorganischen Bestandteilen (Steine, Kies, Sand etc.), wobei der Austrag aus der Waschtrommel 5 separat über die Leitung 10 (organische Bestandteile) und die Leitung 11 (anorganische Bestandteile) erfolgt. Eine weitere, jedoch nicht eingezeichnete Leitung führt von der Waschtrommel 5 zu dem Schwingklassierer 6, und zwar führt diese Leitung die Feinteile unter 6 mm aus der Waschtrommel 5 ab und führt sie dem Schwingklassierer 6 zu.

Der Schwingklassierer 6 besteht aus vier Bahnen und zwar eine erste Bahn für die Wasservorabscheidung und die Vorabsiebung aus dem Oberlauf 7 und der nachfolgenden Leitung 8, eine zweite Bahn für die anorganischen Bestandteile aus der Waschtrommel 5 über die Leitung 11, eine dritte Bahn für die organischen Bestandteile ebenfalls aus der Waschtrommel 5 über die Leitung 10 sowie eine vierte Bahn für die Feinteile unter 6 mm aus der Waschtrommel 5 über die nicht eingezeichnete Leitung. Dabei können auch die erste und die vierte Bahn mit den Feinteilen unter 6 mm zusammengefaßt werden.

Auf den Bahnen des Schwingklassierers 6 werden die Grobbe andteile mehrfach hin- und hergeleitet und von feinen organischen und mineralischen Partikeln gereinigt. Dies gil t insbesondere für die organischen Grobbestandteile, um bei diesen Feinstteile auszuwaschen, die eventuell mit Schwermetallen kontaminiert sind. Die so gereinigten organischen Bestanteile werden von ihrer entsprechenden Bahn des Schwingklassierers 6 einem Container 12 zugeführt, von wo aus das Holz und die Wurzeln der Verbrennung beispielsweise zur Energiegewinnung oder der Kompostierung zugeführt werden. Die anorganischen Grobbestandteile werden ebenfalls nach deren Reinigung einem Kieslager 13 zugeführt, das Steine größer als 6 mm beinhaltet. Auch der Kies im Kieslager 13 kann ebenso wie das Holz und die Wurzeln der Weiterverwertung zugeführt werden.

Mittels einer Förderpumpe 14 werden die anorganischen und organischen Feinbestandteile unterhalb einer Größe von 6 mm einer (Multi-)Zyklonanlage 15 in Suspension zugeführt. In dieser Zyklonanlage 15 erfolgt eine Abscheidung des Sandes zwischen der Mindestgröße 0,063 und 6 mm. Der Zyklonanlage 15 ist dabei ein Schwertrübesortierer 16 mit einer Frischwasser-oder Zentratwasser-Zufuhr 17 nachgeschaltet, die den gereinigten Sand über einen Schwingentwässerer 18 einem Sandlager 19 zuführt. Das Filtratwasser aus dem Schwingentwässerer 18 wird über eine Leitung 20 dem Schwingklassierer 6 rückgeführt.

Die feinen mineralischen Bestandteile unterhalb 0,063 mm, die in der Zyklonanlage 15 nicht ausgesondert werden können, sowie die organischen Feinbestandteile werden über Leitungen 21 (mineralische Trübe) und 22 (organische Trübe) einem Vorlagebecken 23 mit einem Homogenisierer 24 zugeführt. Von dort aus erfolgt der Weitertransport der Trübe mittels einer Förderpumpe 25 zu einer Zentrifuge 26, die die dritte Trennstufe nach der Zyklonanlage 15 als zweite Trennstufe bildet.

In die Leitung 27 zwischen dem Vorlagebecken 23 und der Zentrifuge 26 ist eine Fällungsstation 28 geschaltet, die die in dem Wasser gelösten Phosphate durch Zugabe von Fe(II)Sulfat oder Fe(III)Chloridsulfat ausfällen und in sedimentsfähige Feststoffe überführen sollen.

Weiterhin ist in die Leitung 27 zwischen dem Vorlagebecken 23 und der Zentrifuge 26 eine Neutralisationsstation 29 geschaltet, die durch Zugabe beispielsweise von Kalkmilch das Wasser entsäuern und damit neutralisieren und zugleich eine Sedimentationshilfe geben soll. Auch hier erfolgt eine Ausfällung zu einem sedimentationsfähigen Feststoff.

In der Zentrifuge 26 erfolgt eine Entwässerung der mineralischen und organischen Trübe sowie der Fällungsstoffe aus den Stationen 28 und 29. Der gewonnene Dickschlamm wird beispielsweise über ein Transportband 30 einem Lastkraftwagen 31 aufgegeben und der Deponierung, Kompostierung, Verbrennung oder dgl. zugeführt.

Das Ablaufwasser aus der Zentrifuge 26 (Zentratwasser) wird anschließend in einer zusätzlichen Zentratwasserreinigungsstufe 43 behandelt. Diese Zentratwasserreinigungsstufe 43 ist vorgesehen, um bislang nicht entfernbare Restmengen an Polymer, Schwebstoffen, unzulässig hohe CSB-Werte und dgl. Verunreinigungen zu mindern bzw. zu beseitigen. Es ist anzumerken, daß nachfolgende, auf die Reinigung von Zentratwasser bezogene Beschreibungen, Anweisungen oder Lehren für die Behandlung sämtlicher Trübwässer gelten, die entsprechend verunreinigt sind. Dabei sind folgende Grundlagen zu berücksichtigen:

Normalerweise sind Schwebstoffe im Wasser negativ geladen. Durch den Restgehalt an Polymerstoffen aufgrund der Behandlung in der Zentrifuge 26 haben die Schwebstoffe im Zentrat der Schlammentwässerung eine positive Ladung. Die konventionellen Flockungsmittel, wie z.B. Fe(III)-Salze sind unwirksam im Sinne einer Entfernung solcher Polymerstoffe.

Auch eine normale Filtration ohne Chemikalienzusatz hat sich nicht als praktisch durchführbar erwiesen, da die Kapazität des Filtergrunds begrenzt ist und Schwebstoffe in Folge einer chemischen Reaktion zu fest am Filterkorn haften, so daß eine Reinigung und Rückspülung nur unvollständig durchführbar ist.

Überraschenderweise h at sich ergeben, daß ein vollständiger Erfolg erzielbar ist, indem in der Zentratwasserreinigungsstufe 43 die gesamte Zentratwassermenge mit einem oder mehreren Stoffen versetzt wird, die entweder eine negativ geladene Oberfläche haben oder nach der Zugabe zum Wasser negativ geladene Kolloide bilden. In der praktischen Durchführung werden Natriumaluminat und/oder Bentonit in der Zentratwasserreinigungsstufe zugesetzt. Die Anwendungsmengen betragen 150 g/m$^3$ = ca. 100 ml/m$^3$ Natriumaluminat bzw. 200 bis 250 g/m$^3$ Bentonit in Form einer Natriumaluminatlösung (NaAL) bzw. in Form einer Bentonitsuspension. Dabei wird Natriumaluminat als konzentrierte Lösung direkt zudosiert, während Bentonit, das trocken angeliefert wird, vor der Anwendung aufbereitet werden muß (ca. 2 % Suspension, intensive Einmischung bei einer Quell-Reifezeit von ca. 1 Std.). Die Dosierung sollte zur sicheren Eliminierung der Polymere in Überschuß erfolgen.

Durch die Zuhilfenahme von Natriumaluminat und/oder Bentonit erfolgt im Zentratwasser eine Gegenflockung, die in Kombination mit der nachgeschalteten Flotationsanlage 32 eine erfolgreiche Zentratwasserreinigung durch Polymerausfällung bzw. Absorption, die teilweise in der Pumpe 46, in der Rohrleitung 47 und in der Flotationsanlage 32 stattfindet, erfolgt, wobei das Flockenwachstum erst im Sandbett der abschließenden Sandfilter abgeschlossen ist. Damit werden sämtliche Anlagenteile, die im Behandlungsweg hinter der Zentratwasserreinigungsstufe 43 angeordnet sind zu Reaktionsteilen dieser Verfahrensstufe, die kombinativ den erstrebten Gesamterfolg erbringen. Für die Reaktion des Natriumaluminats und/oder Bentonits mit den Verunreinigungsstoffen dient die Turbulenz und die Verweilzeit in der Pumpe, der Rohrleitung und der Flotationsanlage. Zusätzlich oder alternativ zur Flotationsanlage kann ein Lamellenklärer 48 verwendet werden, dem ein eigenes Flockungsbecken 44 vorgeschaltet werden kann.

Im Verfahrensverlauf wird das in der Zentratwasserreinigungsstufe 43 mit Natriumaluminat bzw. Bentonit versetzte Ablaufwasser entweder direkt der pneumatischen Flotationszelle 32 zugeführt oder über das Flockungsbecken 44 geleitet. Die Flotationszelle 32 besteht aus zwei Begasungsreaktoren 33, die mit einem Kompressor betrieben werden. Weiterhin besteht die pneumatische Flotationszelle 32 aus einem Trenngefäß 34 mit einem Überlauf 35.

In der beschriebenen Ausgestaltung dient die pneumatische Flotationszelle 32 nicht nur zur Abscheidung des im Ablaufwasser möglicherweise enthaltenen Öls, sondern insgesamt zur Förderung der Reaktion der in der Reinigungsstufe 43 zugesetzten Chemikalien mit den Verunreinigungsstoffen. Zu diesem Zweck wird das mit Polymer, mit Schwebstoffen, Phosphaten und CSB-belastete Zentrat durch die beiden Begasungsreaktoren 33 geschickt, in der eine feinblasige Gasdispergierung erfolgt, wobei das Ablaufwasser möglichst vollständig mit gleichen Gasblasen durchsetzt wird. Das in die Begasungsreaktoren 33 eintretende Öl/Wasser/Flockungsstoffe-System wird dabei im Querstrom mit Gas beaufschlagt, wobei hohe Gas- und Wassergeschwindigkeiten in den Begasungsreaktoren 33 für die Anlagerungsgenetik vorteilhaft sind. Durch die hier herrschenden physikalischen Bedingungen (Mikroturbulenzen und Luftblasen im "status nascendi", verbunden mit der zwangsweisen Zusammenführung der Ölteilchen und Flokkungsteilchen mit den Gasblasen) wird eine sehr hohe Anhaftung sämtlicher Partikel an die Gasphase während der sehr kurzen Verweilzeit im Begasungsreaktor 33 erreicht. Dabei kann die Bildung der Gasblasen durch eine poröse Rohrwandung mit sehr gleichmäßigen Öffnungen geringen Durchmessers erfolgen. Die eigentliche Separation findet dann im nachgeschalteten zylindrischen Trenngefäß 34 statt, wobei die Flockungs/Luft-Teilchen aufgrund ihrer geringeren Dichte nach oben an die Oberfläche treiben, wobei die die Verunreinigungen enthaltende Phase über den Überlauf 35 ausgetragen und das Konzentrat in Form eines eingedickten Flockungsschlamms in einen Container 3 6 ausgetragen und gesammelt wird. Von dort aus kann der Schlamm in den Zulauf der Zentrifuge 26 über die Leitung 37 zurückgeführt werden.

Um spezifisch die Ölabscheidung weiter zu verbessern, können mittels einer Zugabestation 38, die gestrichelt dargestellt ist, Ölemulsionsbrechende Chemikalien, insbesondere Tenside, zusätzlich eingespeist werden.

Das derart gereinigte Ablaufwasser wird aus der pneumatischen Flotationszelle 32 nach Passieren eines Füllstandsreglers 39 über einen Sandfilter, ggf. kombiniert mit einem Festkörperfilter 40 geleitet. Im Filter 40 wird das Ablaufwasser so weit entgereinigt, daß Restpolymere nicht mehr nachweisbar sind, Schwebestoffe auf Werte < 10 mg/l reduziert werden und eine CSB-Reduzierung mit > 50 % gegenüber dem Einleitungswert erreicht ist. Ölemulsionen treten optisch nicht mehr in Erscheinung (keine Opaleszenz).

Nach Passieren der Filtereinrichtung 40 gelangt das Ablaufwasser in einen Vorflutergraben 41, der üblicherweise eine Ölsperre 42 hat, die jedoch bei Anwendung obigen Verfahrens überflüssig ist. Von dort aus erfolgt die Rückführung des Ablaufwassers zurück in das Gewässer.

Die Rückspülung vom Filter 40 wird kontinuierlich in die Flotationsanlage bzw. einen zwischen Flotation 44 und Filter 40 eingesetzten Lamellenklärer 48 über die Leitung 45 geführt und verbessert als Kontaktschlamm die Flockung. Der im Lamellenklärer 48 anfallende Schlamm wird dem Einlauf des Dekanters 26 oder einem Tank zugeführt.

Die beschriebene Anlage kann stationär aufgebaut sein. Sie kann aber auch mobil sein, d.h. sie kann zu ihrem jeweiligen Einsatzgebiet transportiert werden. Die Anlage kann dabei eine einzige kompakte Vorrichtung sein, in der alle Elemente enthalten sind.

## Ansprüche

1. Verfahren zum Entschlammen von Gewässern, bei dem die im suspensionsartigen Schlamm enthaltenen anorganischen (Steine, Kies, Sand etc.) und organischen (Holz, Wurzeln etc.) Bestandteile voneinander separiert werden, wobei zunächst in einer ersten Stufe aus dem Schlamm die Bestandteile oberhalb einer bestimmten Größe getrennt nach anorganischen und organischen Bestandteilen ausgesondert, gereinigt und der Weiterverwertung zugeführt werden, wobei anschließend in einer zweiten Stufe aus den verbliebenen Bestandteilen oberhalb einer Mindestgröße die anorganischen Bestandteile ausgesondert, gereinigt und ebenfalls der Weiterverwertung zugeführt werden und wobei schließlich in einer dritten Stufe die anorganische und organische Trübe der dann übrig gebliebenen Bestandteile entwässert und dabei der gewonnene Dickschlamm weiterverarbeitet und das anfallende Zentratwasser bzw. Filtratwasser in das Gewässer zurückgeleitet wird,
**dadurch gekennzeichnet,**
daß zur Reinigung des insbesondere mit Polymeren, Schwebstoffen, Phosphaten und/oder CSB verunreinigten Zentratwassers bzw. Filtratwassers der dritten Stufe dieses mit Natriumaluminat im Bereich zwischen 120 und 225 $g/m^3$ Wasser, vorzugsweise 150 $g/m^3$ Wasser, als konzentrierte Lösung und/oder Bentonit im Bereich zwischen 180 und 300 $g/m^3$ Wasser, vorzugsweise zwischen 200 und 250 $g/m^3$ Wasser, in 2%-iger Suspension als Flockungsmittel versetzt wird, daß die Flockung durch eine pneumatische Flotationsbehandlung des mit dem Flockungsmittel versetzten Wassers unterstützt wird,
daß im Anschluß an die Flockung eine Sandfiltration durchgeführt wird und
daß die ausgeflockte Phase aus Flockungsteilchen, Polymerstoffen, Ölteilchen und Schwebstoffen in Form eines Flockungsschlamms als Kontaktschlamm in die Behandlung zurückgeführt wird.

2. Verfahren nach Anspruch 1, dadurch gekennzeichnet, daß eine Verweilstufe, vorzugsweise in Form eines LamellenKlärers und/ oder eines Flockungsbeckens in die Flockung eingeschaltet ist, wobei dort anfallender Schlamm in einen Tank oder in den Zulauf eines Dekanters zurückgeführt wird.

3. Vorrichtung zur Durchführung des Verfahrens nach Anspruch 1 oder 2, mit einer Entnahmevorrichtung (1) für den Schlamm, mit einem Klassierer (6) zum Aussondern der Bestandteile oberhalb einer bestimmten Größe und Trennen nach anorganischen und organischen Bestandteilen, mit einer dem Klassierer (6) nachgeordneten Zyklonanlage (15) zum Aussondern der anorganischen Bestandteile oberhalb einer Mindestgröße aus den verbliebenen Bestandteilen sowie mit einer der Zyklonanlage (15) nachgeordneten Zentrifuge (26) zum Entwässern der anorganischen und organischen Trübe der übrig gebliebenen Bestandteile und Überführen in Dickschlamm, **gekennzeichnet durch** eine eine Flockungsmittelzugabe (FM) für das Flockungsmittel sowie einen Sandfilter (40) aufweisende Wasserreinigungsanlage (Zentratwasserreinigungsstufe 43), eine der Flockungsmittelzugabe (FM) nechgeordnete pneumatische Flotationsanlage (32) zur Unterstützung der Flockung, eine Rückspülleitung vom Sandfilter (40) zur Flotationsanlage (32), einen dem Sandfilter (40) vorgeordneten Lamellenklärer (48), eine Rückführungsleitung vom Lamellehklärer (48) zu einem Tank oder einem Dekanter (26), sowie durch ein zwischen der Flotationsanlage (32) und dem Lamellenklärer (48) angeordnetes Flockungsbecken (44).

## Claims

1. A method of removing sludge from water, in which the inorganic constituents (stones, gravel, sand etc.,) in the suspended sludge are separated from the organic constituents (wood, roots etc.,), and first, in a first stage the constituents above a given size are removed from the sludge and separated into inorganic and organic constituents, purified and sent for further processing, next, in a second step, the inorganic constituents above a minimum size are separated from the remaining constituents, purified and likewise sent for further processing, and finally, in a third step, the inorganic and organic sludge of remaining components is dewatered and the resulting heavy liquid is additionally processed and the resulting centrate water or filtrate water is returned to the original water, characterised in that in order to purify the centrate water or filtrate water from the third stage, which is contaminated more particularly with polymers or matter in suspension or phosphates and/or CSB (= chemical oxygen demand), sodium aluminate is added in the form of a concentrated solution in the range between 120 and 225 $g/m^3$ water, preferably 150 $g/m^3$ water and/or bentonite is added in the range between 180 and 300 $g/m^3$ water, preferably between 200 and 250 $g/m^3$ water, in 2% suspension as a flocculant, flocculation is assisted by pneumatic flotation treatment of the water after adding the flocculant, flocculation is followed by sand filtration and the phase removed by flocculation and comprising particles, polymers, oil particles and suspended matter in the form of flocculation sludge is fed as contact sludge for processing.

2. A method acccording to claim 1, characterised in that a residence stage, preferably in the form of a baffle plate thickener and/or a flocculation basin is incorporated in the flocculation process and the sludge accumulating there is returned to a tank or to the inlet of a decanter.

3. Apparatus for working the method according to claim 1 or 2, comprising a device (1) for withdrawing the sludge, a classifier (6) for removing constituents above a given size and separating them into inorganic and organic constituents, a cyclone system (15) downstream of the classifier (6) and for removing inorganic constituents above a minimum size from the remaining constituents, and a centrifuge (26) disposed downstream of the cyclone plant (15) for dewatering the inorganic and organic sludge of remaining constituents and converting it into heavy liquid, characterised by a water purification plant (centrate water purification stage (43) comprising a flocculant feed (FM) and a sand filter (40), a pneumatic flotation plant (32) downstream of the flocculant feed (FM) and for promotion of flocculation, a return line from the sand filter (40) to the flotation plant (32), a baffle plate thickener (48) disposed upstream of the sand filter (40), a return line from the baffle plate thickener (48) to a tank or decanter (26) and

a flocculation basin (44) disposed between the flotation plant (32) and the baffle plate thickener (48)

## Revendications

1. Procédé pour éliminer les boues (de cours ou de masses) d'eau, selon lequel on sépare les unes des autres les parties constitutives minérales (pierres, gravier, sable, etc) et organiques (bois, racines, etc) contenues dans de la boue en suspension, en enlevant tout d'abord dans une première étape, par triage de la boue les parties constitutives, triées en parties minérales et en parties organiques, dont la grosseur excède une certaine valeur, on nettoie ces parties et on les achemine vers la suite de leur utilisation ou de leur valorisation; puis, dans une seconde étape, on trie parmi les parties restantes les parties constitutives minérales ayant une grosseur supérieure à une valeur minimale, on les nettoie et on les achemine également vers la suite de leur utilisation ou de leur valorisation; et enfin, dans une troisième étape, on élimine l'eau des parties constitutives restant encore de la matière trouble minérale et organique, on continue le traitement de la boue épaisse ainsi obtenue et l'on recycle dans (le cours ou la masse de) l'eau l'eau centrifugée ou filtrée ainsi obtenue, procédé caractérisé en ce que, pour épurer l'eau centrifugée ou filtrée de la troisième étape, eau souillée en particulier par des polymères, des matières en suspension, des phosphates et/ou des matières responsables de la demande chimique en oxygène (DCO), on ajoute à cette eau, à titre d'agent de floculation, de l'aluminate de sodium en une quantité comprise entre 120 et 225 g/m$^3$ d'eau,avantageusement 150 g/m$^3$ d'eau, sous forme de solution concentrée, et/ou de la bentonite en une quantité comprise entre 180 et 300 g/m$^3$ d'eau ,avantageusement entre 200 et 250 g/m$^3$ d'eau, sous forme de suspension à 2%; on facilite la floculation par un traitement de flottation pneumatique de l'eau additionnée de l'agent de floculation; on effectue, après la floculation, une filtration sur du sable; et l'on recycle vers le traitement, à titre de boue de contact ou à rôle catalytique, la phase séparée sous forme de floculat et constituée de particules de floculat, de matières polymères, de particules huileuses et de matières en suspension.

2. Procédé selon la revendication 1, caractérisé en ce qu'on intercale une étape de retenue, avantageusement sous forme d'un séjour dans un clarificateur à lamelles et/ou dans un bassin de floculation, dans la floculation, en recyclant dans une cuve ou dans l'alimentation d'un dispositif de décantation, la boue obtenue lors de la floculation.

3. Installation pour la mise en oeuvre du procédé selon la revendication 1 ou 2, comportant un dispositif (1) de prélèvement de la boue, un classificateur ou classeur (6) pour trier les parties de la boue ayant une grosseur supérieure à une valeur déterminée et séparer les parties en des parties minérales et des parties organiques; une installation (15) de cyclone(s), montée en aval du classeur (6) pour trier et séparer des parties restantes les parties minérales dont la grosseur est supérieure à une valeur minimale; ainsi qu'une centrifugeuse (26), montée en aval de l'installation (15) de cyclones pour enlever l'eau des parties restantes de la matière trouble minérale et organique, installation caractérisée en ce qu'elle comporte une installation d'épuration d'eau (étape 43 d'épuration de l'eau centrifugée) présentant un poste (FM) d'addition de l'agent de floculation ainsi qu'un filtre (40) à sable; une installation (32) de flottation penumatique, disposée en aval du poste (FM) d'addition du floculant, pour faciliter la floculation, un conduit de contre-rinçage allant du clarificateur (48) à lamelles à une cuve ou à un dispositif de décantation (26); ainsi qu'un bassin de floculation (44), disposé entre l'installation (32 ) de flottation et le clarificateur (48) à lamelles.

Fig.1

Fig. 2

43    45

Rückspülung

alt.

26    F|M    46    47    44    48    40

Tank    Dekanter    Ppe    Flockung /
Flotation    Flo.    Lamellenklärer    Ppe    Filter    Belüftung    Sec.

alt.    Schlamm (sed.)

EP 0 267 328 B1